# FASCICULE DE BREVET EUROPEEN

(11) **EP 3 888 979 B1**
(45) Date de publication et mention de la délivrance du brevet: **25.01.2023**
(21) Numéro de dépôt: 21162536.3
(22) Date de dépôt: 15.03.2021
(51) Int. Cl.: B60R 9/06, B60R 9/10

(54) **PORTE-VÉLO ESCAMOTABLE**
VERSENKBARER FAHRRADTRÄGER
RETRACTABLE BIKE MOUNT

(30) Priorité: 31.03.2020 FR 2003168
(43) Date de publication de la demande: 06.10.2021
(73) Titulaire: Renault s.a.s, 92100 Boulogne Billancourt (FR)
(72) Inventeur: VIANO, Juan Pablo, 5009 Córdoba Cap. (AR)
(74) Mandataire: Renault Group

(56) Documents cités:
- EP-A1- 1 227 004
- EP-A1- 2 532 554
- EP-A2- 1 892 153
- FR-A1- 2 820 382
- FR-A1- 2 855 471
- JP-A- H08 175 275

## Description

L'invention concerne un porte-vélo escamotable pour véhicule automobile.

La possibilité de transporter un ou plusieurs vélos sur leur véhicule automobile est un besoin de plus en plus répandu chez les usagers de véhicules automobiles.

Parmi les systèmes connus de porte-vélo, on connaît les porte-vélo sur hayon, qui comportent une armature dotée d'une fourche de réception pour un ou plusieurs vélos et apte à être fixée contre le hayon de coffre. Ce type de porte-vélo, qui présente l'avantage d'être amovible et montable rapidement sur le hayon de coffre, ne convient toutefois pas à tous les types de véhicule, notamment en raison de leur forme. De surcroît, le système de fixation contre le hayon de coffre peut endommager la peinture du véhicule, de même que les mouvements générés par une mauvaise adhérence du vélo sur le porte-vélo. Enfin, il existe un risque de désolidarisation du porte-vélo.

Le document FR 2 992 600 divulgue un porte-vélo pour véhicule automobile présentant un hayon arrière, ledit porte-vélo comprenant une structure porteuse adaptée pour être mobile entre au moins deux positions, respectivement une position repliée, dans laquelle elle est apte à être logée dans un logement prévu à cet effet dans ledit hayon, et une position déployée, dans laquelle elle est apte à s'étendre depuis ledit hayon, vers l'arrière du véhicule, dans un plan sensiblement horizontal, ladite structure porteuse étant pourvue d'au moins un organe de support comprenant un berceau de réception d'une portion de cadre de vélo et d'un cache adapté pour venir fermer ledit logement et masquer ladite structure porteuse lorsque celle-ci est dans sa position repliée.

On connaît aussi des portes-vélo sur moyen d'attelage, qui comportent un châssis supportant un ou plusieurs vélos et destiné à être monté rigidement sur une boule d'attelage solidaire du soubassement arrière du véhicule. Ce type de porte-vélos sur moyen d'attelage nécessite toutefois l'installation préalable en après-vente sur le véhicule d'une boule d'attelage.

On connaît aussi des portes-vélo escamotables pour véhicule automobile, intégrés au véhicule et destinés à se déployer à partir du véhicule depuis une configuration de rangement entre une position repliée et une position de transport (ou déployée). Ainsi, contrairement aux portes-vélo amovibles, qui doivent être retirés lorsqu'ils ne sont pas utilisés, ces portes-vélo sont montés à demeure sur le véhicule et disponibles à tout moment. Un tel porte-vélo est notamment connu par l'exemple qu'en donne le document de brevet US 10,343,614 B2. Ce document décrit une structure porteuse intégrée au hayon arrière du véhicule.

Cette structure porteuse comprend un support assemblé à un panneau intérieur du hayon arrière et deux bras porteurs reliés de manière pivotante au support autour d'un axe de pivotement sensiblement vertical. Chaque bras porteur peut pivoter autour de l'axe de pivotement vertical entre une position repliée dans laquelle il est emboîté dans une trappe du hayon arrière prévue à cet effet et une position déployée dans laquelle il s'étend vers l'arrière à l'extérieur du véhicule.

Un élément de garniture est agencé avec chaque bras porteur pour masquer le porte-vélos lorsque les bras sont en position repliée. Chaque bras porteur comprend au moins un élément de réception formant berceau qui peut pivoter autour d'un axe longitudinal du bras porteur pour venir dans une position orientée vers le haut lorsque le bras porteur est en position déployée, de façon à permettre d'accueillir une portion de cadre d'un vélo supporté par les bras porteurs.

Cet agencement particulier de la structure porteuse permet certes de faciliter l'intégration du porte-vélo dans le véhicule, mais a pour inconvénient d'occuper une zone importante du hayon arrière du véhicule pour permettre d'y loger les deux bras porteurs. De surcroit, la mise en place des berceaux nécessitent une cinématique propre, au détriment de l'encombrement global.

Un but de l'invention est de proposer un porte-vélo pour véhicule automobile, qui s'avère plus pratique, compact et ergonomique.

A cet effet, l'invention concerne un porte-vélo pour véhicule automobile présentant un hayon arrière, ledit porte-vélo comprenant une structure porteuse adaptée pour être mobile entre au moins deux positions, respectivement une position repliée, dans laquelle elle est apte à être logée dans un logement prévu à cet effet dans ledit hayon, et une position déployée, dans laquelle elle est apte à s'étendre depuis ledit hayon, vers l'arrière du véhicule, dans un plan sensiblement horizontal, ladite structure porteuse étant pourvue d'au moins un organe de support comprenant un berceau de réception d'une portion de cadre de vélo et d'un cache adapté pour venir fermer ledit logement et masquer ladite structure porteuse lorsque celle-ci est dans sa position repliée, caractérisé en ce que ladite structure porteuse est constituée par un ensemble plan de quatre barres articulées entre elles deux à deux en parallélogramme déformable, deux premières barres comprenant une extrémité apte à être montée pivotante par rapport à une paroi avant dudit logement autour d'un axe commun sensiblement vertical apte à être lié à ladite paroi avant et deux secondes barres comprenant une extrémité libre reliée autour d'un axe commun solidaire dudit cache.

Avantageusement, la position déployée correspond à la position extrême de déploiement maximal du parallélogramme déformable.

Avantageusement, le porte-vélo peut comprendre un mécanisme de verrouillage de la structure porteuse dans sa position déployée.

Avantageusement, ledit berceau de réception comporte une bride de maintien de la portion de cadre de vélo reçue dans ledit berceau de réception, ladite bride de maintien étant apte à être placée dans un état ouvert permettant de ménager un passage radial de dépose de la portion de cadre de vélo dans le berceau de réception et dans un état fermé permettant d'obturer ledit passage et dans lequel ladite bride de maintien est verrouillée sur ledit berceau de réception. Avantageusement, ladite bride de maintien est reliée au berceau de réception par l'intermédiaire d'un verrou apte à être actionné par la clé de contact du véhicule. Avantageusement, ledit organe de support comprend un mât-support faisant saillie d'une des deux secondes barres et à l'extrémité supérieure duquel est disposé le berceau de réception.

Avantageusement, ledit mât-support est monté à coulissement vertical dans ladite une des secondes barres et à rotation par rapport à ladite une des secondes barres, des moyens d'indexation angulaire et de verrouillage étant prévus entre ledit mât-support et ladite une des secondes barres pour ne permettre le coulissement dudit mât-support que dans une position angulaire déterminée de celui-ci par rapport à ladite une des secondes barres et pour verrouiller ledit mât-support dans une position verticale déterminée. Avantageusement, lesdits moyens d'indexation angulaire et de verrouillage comprennent une pluralité de pions saillant transversalement dudit mât-support et alignés à intervalles réguliers le long dudit mât-support, lesdits pions étant aptes à être insérés dans une rainure verticale correspondante d'un logement de réception prévu dans ladite une des secondes barres, chaque pion étant apte à être clipsé dans ledit logement de réception par rotation dudit mât-support. D'autres caractéristiques et avantages de l'invention ressortiront clairement de la description qui en est faite ci-après, à titre indicatif et nullement limitatif, en référence aux dessins annexés sur lesquels :
[Fig. 1] représente schématiquement une vue arrière en perspective d'un véhicule automobile intégrant un porte-vélo selon l'invention dont la structure porteuse, faisant saillie du hayon arrière du véhicule, supporte un vélo disposé dans un plan vertical ;
[Fig. 2] est une vue du côté du porte vélo selon l'invention en position déployée ;
[Fig. 3] représente une vue arrière du porte-vélo selon l'invention en position repliée ;
[Fig. 4] représente une vue arrière du porte-vélo selon l'invention en position déployée ;
[Fig. 5] représente schématiquement une vue de détail de l'organe de support du porte-vélo de l'invention ;
[Fig. 6] représente schématiquement une vue de détail du mât-support de l'organe de support du porte-vélo de l'invention ;
[Fig. 7] représente schématiquement le berceau de réception de l'organe de support du porte vélo selon l'invention, dans une position ouverte ;
[Fig. 8] représente schématiquement le berceau de réception de l'organe de support du porte vélo selon l'invention, dans une position fermée ;
[Fig. 9] représente schématiquement une vue de détail du berceau de réception de l'organe de support du porte vélo selon l'invention.

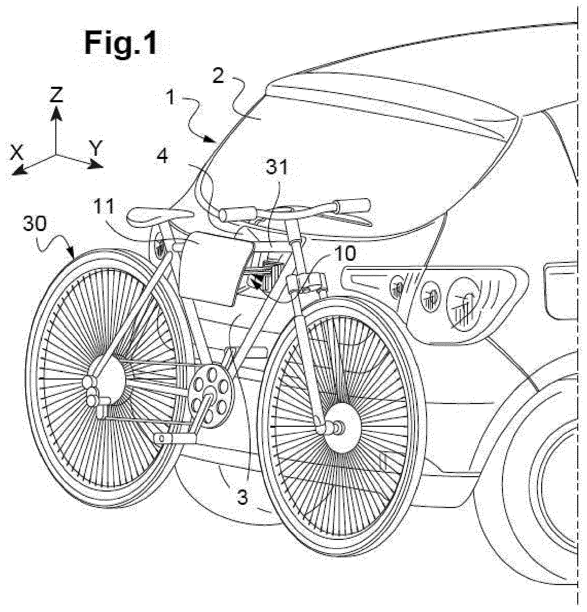

Pour les besoins de la description, on se référera à un repère orthonormé direct XYZ, classiquement utilisé en conception automobile, dans lequel l'axe X désigne la direction longitudinale du véhicule, orienté vers l'arrière, l'axe Y désigne la direction transversale et est orienté vers la droite du véhicule, et l'axe Z désigne la direction verticale, et est orienté vers le haut. Par sensiblement horizontal ou vertical, on entend une direction/un plan formant un angle d'au plus ±10°, voire d'au plus ±5°avec une direction/un pla n horizontal ou vertical. L'invention concerne donc un porte-vélo pour un véhicule automobile équipé d'un hayon. On peut voir sur la figure 1, une représentation schématique de l'arrière d'un véhicule automobile présentant un hayon 1, articulé selon un axe s'étendant au voisinage du pavillon. Le hayon comprend, classiquement, une partie supérieure vitrée 2 et une partie inférieure pleine 3, à l'intérieur de laquelle on a défini un logement 4, pouvant recevoir une structure porteuse 10 d'un porte-vélo selon l'invention.

La structure porteuse 10 du porte-vélo est donc conçue pour s'escamoter dans le logement 4 prévu à cet effet, lorsqu'il n'est pas utilisé, et pour se déplier depuis le hayon vers l'arrière du véhicule, dans un plan horizontal, lorsqu'il doit être utilisé.

La structure porteuse 10 du porte-vélo est prévue pour être déployée manuellement.

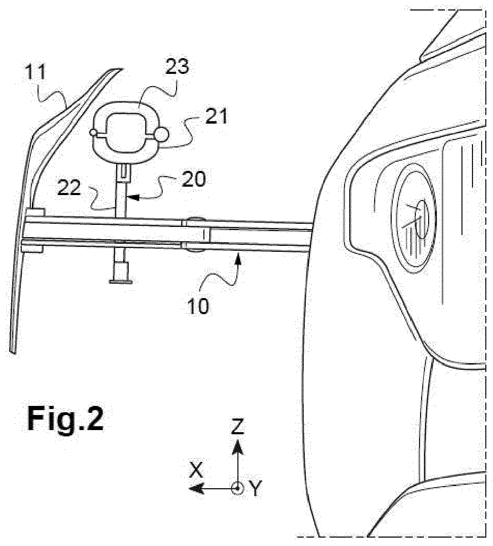

En référence aux figures 1 et 2, l'extrémité libre de la structure porteuse 10 est munie d'un cache 11, adapté pour venir fermer le logement 4 et ainsi masquer la structure porteuse 10 lorsque celle-ci est repliée dans le logement 4. Le cache 11 est ainsi dimensionné de telle sorte que sa périphérie vienne épouser le contour du logement 4 en position de fermeture du logement.

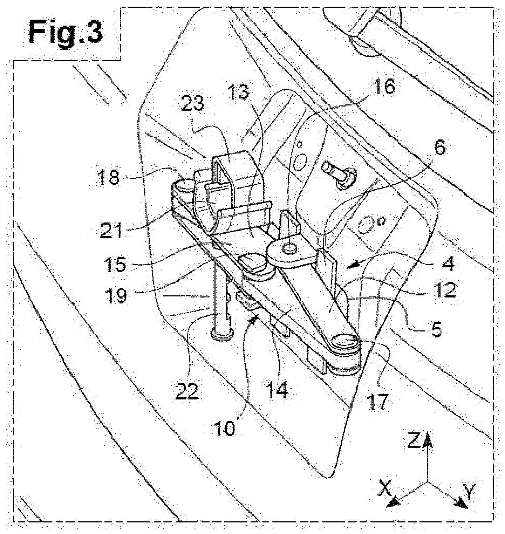

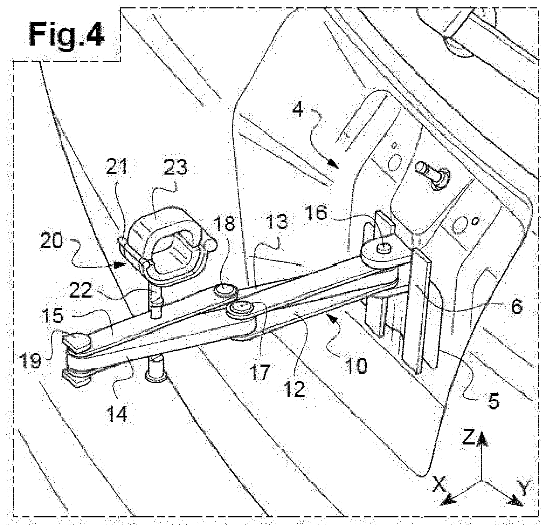

Les figures 3 et 4 représentent une vue arrière du porte-vélo selon l'invention, sans la présence du cache 11 pour plus de lisibilité, respectivement en position repliée dans le logement 4 (figure 3) et en position déployée vers l'arrière du véhicule dans un plan horizontal (Figure 4). La structure porteuse 10 est constituée de quatre barres 12, 13, 14 et 15 reliés entre eux deux à deux par quatre articulations 16, 17, 18 et 19, de manière à former une structure de parallélogramme déformable, prévue pour se déformer dans un plan sensiblement horizontal. Les deux premières barres 12 et 13 comprennent chacune une première extrémité montée pivotante par rapport à une paroi avant 5 du logement 4, définissant le fond de celui-ci, autour d'un axe commun 16 sensiblement vertical lié à ladite paroi avant 5 du logement 4, préférentiellement par l'intermédiaire d'un renfort de tôle 6 fixé sur cette paroi avant. Les deux premières barres 12 et 13 comprennent également chacune une deuxième extrémité reliée à une première extrémité d'une seconde barre respective 14, 15 par une articulation respective 17, 18 d'axe vertical. Les deux secondes barres 14 et 15 comprennent chacune une extrémité libre, opposée à leur première extrémité, reliée autour d'un axe commun vertical 19 solidaire du cache 11 (non représenté sur ces figures 3 et 4). Le cache 11 est donc disposé à l'opposé du logement 4 par rapport à la structure porteuse 10.

Ainsi, l'ensemble des quatre barres articulées12, 13, 14 et 15 forme une structure du type à parallélogramme déformable pouvant être déformée à volonté dans un plan horizontal entre la position repliée de la figure 3 et la position déployée de la figure 4.

Ainsi, grâce à cette liaison à parallélogramme déformable reliant la paroi avant 5 du logement 4 au cache 11, lorsque la structure porteuse 10 est déployée, l'extrémité libre du parallélogramme reliée au cache 11 subit une translation dans son plan, ce qui provoque son allongement et l'éloignement du cache 11 par rapport au logement 4, où l'autre extrémité du parallélogramme est fixée. La position déployée de la structure porteuse du porte-vélo, telle qu'illustrée à la figure 2 ou la figure 4, correspond à la position extrême de déploiement maximal du parallélogramme déformable. Dans cette position déployée, la structure porteuse 10 s'étend essentiellement suivant l'axe longitudinal du véhicule. Un mécanisme de verrouillage (non représenté) de la structure porteuse 10 dans cette position déployée peut avantageusement être prévu. Ce mécanisme peut par exemple se présenter sous la forme d'un loquet de verrouillage adapté pour coopérer avec des moyens de retenue complémentaires, pour assurer le verrouillage de la structure porteuse en position de déploiement maximal du parallélogramme déformable.

La position repliée de la structure porteuse 10 du porte-vélo, telle qu'illustrée à la figure 3, correspond à la position extrême de repliement maximal du parallélogramme déformable. Dans cette position repliée, la structure porteuse 10 s'étend essentiellement suivant l'axe transversal du véhicule.

En référence à la figure 1, la structure porteuse, dans sa position déployée, supporte un vélo 30 disposé à la verticale. Pour ce faire, la structure porteuse 10 est pourvue d'un organe de support 20, solidaire d'une des secondes barres de la structure porteuse 10, qui comprend un berceau de réception 21 d'une portion de cadre de vélo, typiquement une portion du tube supérieure du cadre. Le berceau de réception 21 est orienté vers le haut et l'axe du berceau de réception s'étend transversalement lorsque la structure porteuse 10 est déployée. Ainsi, lorsque la portion du tube supérieur du cadre de vélo est reçue dans le berceau de réception 21, le tube supérieur 31 du cadre de vélo s'étend essentiellement suivant l'axe transversal du véhicule.

L'organe de support 20 est monté sur la seconde barre 15 de la structure porteuse 10 par l'intermédiaire d'un mât-support 22, faisant saillie verticalement de cette seconde barre et à l'extrémité supérieure duquel est disposé le berceau de réception 21. Le mât-support 22 peut coulisser verticalement par rapport à la seconde barre 15 sur laquelle il est monté, de façon à permettre d'adapter la hauteur du berceau de réception 21 par rapport à la structure porteuse 10, notamment en fonction du type de vélo destiné à être transporté.

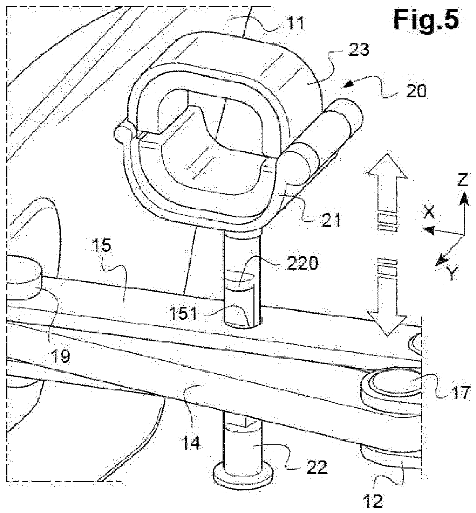

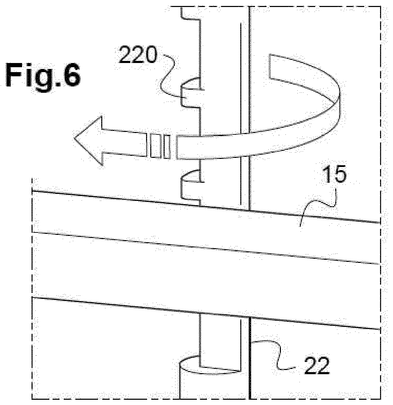

Pour ce faire, et comme on le voit mieux sur les vues de détail des figures 5 et 6, le mât-support 22 est monté sur la barre 15 de manière amovible au moyen d'un accouplement. Cet accouplement comprend une interface mécanique, qui autorise un réglage aisé et rapide de la position verticale du mât-support 22 et partant, du berceau de réception 21. L'interface mécanique peut comprendre des moyens d'indexation angulaire du mât-support 22 autour de son axe principal par rapport à un logement de réception 151 d'axe vertical traversant la barre 15, dans lequel est monté le mât-support 22, ainsi que des moyens de verrouillage de la position verticale du mât support par rapport à la barre permettant d'assurer une fonction de verrouillage et déverrouillage rapide.

Par exemple, comme illustré sur la vue de détail de la figure 6, les moyens d'indexation angulaire et de verrouillage peuvent comprendre une pluralité de pions 220 saillant transversalement du mât-support 22 et alignés à intervalles réguliers le long du mât-support 22, chaque pion 220 permettant de définir une position verticale du mât-support 22. Ces pions 220 sont destinés à être reçus dans une rainure verticale correspondante (non représentée) du logement de réception 151 lorsque le mât-support est tourné autour de son axe pour aligner les pions avec cette rainure verticale, permettant alors une insertion et un coulissement vertical du mât-support 22 dans le logement de réception 151. Autrement dit, ces moyens d'indexation angulaire ne permettent l'insertion et le coulissement du mât-support 22 que dans une position angulaire déterminée de celui-ci par rapport à la seconde barre 15 dans laquelle il est monté.

Le verrouillage d'une position verticale déterminée consiste à clipser le pion 220 correspondant à cette position verticale dans le logement de réception 151. Ce verrouillage peut s'effectuer par rotation du mât-support 22 autour de son axe, par exemple d'un quart de tour par rapport à la position de coulissement, permettant de loger le pion 220 qui a été inséré par translation dans le logement de réception, dans une rainure transversale à la rainure verticale ménagée à cet effet dans le logement de réception 151.

Dans la position de verrouillage du mât-support 22, l'axe du berceau de réception 21 est orienté transversalement par rapport à l'axe longitudinal du véhicule. Ainsi, les moyens d'indexation angulaire et de verrouillage prévus entre le mât-support 22 et la seconde barre 15 dans laquelle il est monté, permettent d'assurer une insertion du mât-support 22 dans le logement de réception 151 par indexation angulaire, puis une translation verticale du mât-support 22 à travers le logement de réception 151 jusqu'à atteindre la position verticale souhaitée et enfin un clipsage du pion correspondant à cette position verticale dans le logement de réception. Ceci représente solution très simple à mettre en oeuvre. Le réglage de la position verticale du mât-support 22 est ainsi très aisé et très rapide.

Comme illustré à la figure 3, dans la position repliée de la structure porteuse 10 dans le logement 4, le mât-support 22 est descendu au maximum par rapport à la seconde barre 15, jusqu'à faire reposer le berceau de réception 21 sur celle-ci. Dans cette position repliée, l'axe du berceau de réception 21 est orienté parallèlement par rapport à l'axe longitudinal du véhicule, pour réduire l'encombrement.

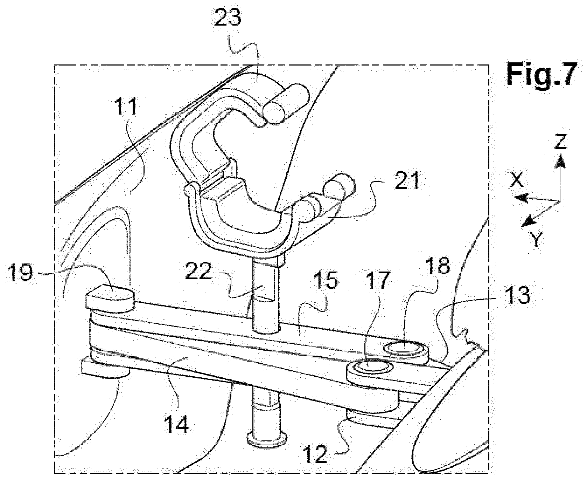

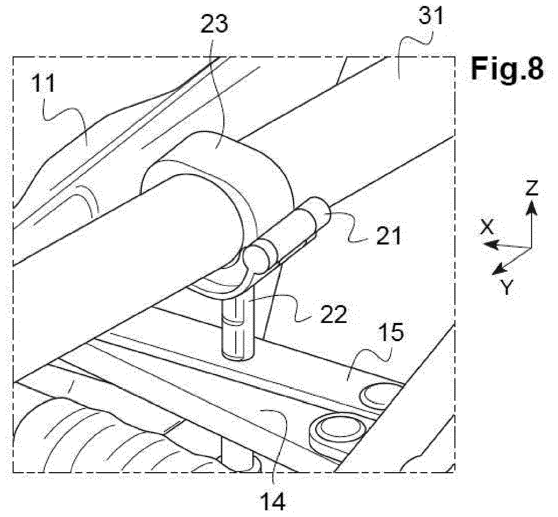

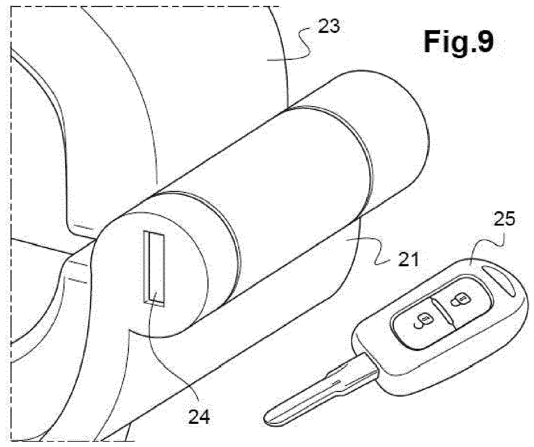

Par ailleurs, le berceau de réception 21 de l'organe de support 20 peut comporter une bride de maintien 23 destinée à maintenir la portion de tube de cadre de vélo qui est reçue dans le berceau 21. Cette bride de maintien 23 est montée à pivotement sur le berceau de réception 21 suivant un axe parallèle à l'axe du berceau 21. Une liaison pivot selon cet axe est ainsi agencée au niveau de premières extrémités respectives du berceau de réception 21 et de la bride de maintien 23. Grâce à cette liaison, la bride de maintien est apte à être placée dans un état ouvert (figure 7) permettant de ménager un passage radial de dépose d'une portion de tube de cadre de vélo dans le berceau de réception 21 et dans un état fermé (figure 8) permettant d'obturer ledit passage et d'enserrer la portion de tube 31 logé entre le berceau de réception 21 et la bride de maintien 23. Les surfaces intérieures en vis-à-vis de la bride de maintien 23 et du berceau de réception 21 peuvent être revêtues de coussinets de caoutchouc, de façon à permettre de générer une pression de serrage sur le tube du vélo et ainsi en limiter les mouvements. Dans l'état fermé, on prévoit avantageusement que la bride maintien 23 puisse être verrouillée sur le berceau de réception 21, de façon à se prémunir contre les vols. Ainsi, comme l'illustre l'exemple de la figure 9, la bride de maintien 23 peut être reliée au berceau de réception 21 par l'intermédiaire d'un verrou 24 apte à être actionné par la clé de contact 25 du véhicule. Ce verrou est par exemple agencé au niveau des deuxièmes extrémités respectives du berceau de réception 21 et de la bride de maintien 23, opposés aux premières extrémités respectives du berceau de réception 21 et de la bride de maintien 23 articulées par la liaison pivot.

## Revendications

1. Porte-vélo pour véhicule automobile présentant un hayon arrière, ledit porte-vélo comprenant une structure porteuse (10) adaptée pour être mobile entre au moins deux positions, respectivement une position repliée, dans laquelle elle est apte à être logée dans un logement (4) prévu à cet effet dans ledit hayon, et une position déployée, dans laquelle elle est apte à s'étendre depuis ledit hayon, vers l'arrière du véhicule, dans un plan sensiblement horizontal, ladite structure porteuse étant pourvue d'au moins un organe de support (20) comprenant un berceau de réception (21) d'une portion de cadre de vélo et d'un cache (11) adapté pour venir fermer ledit logement et masquer ladite structure porteuse lorsque celle-ci est dans sa position repliée, **caractérisé en ce que** ladite structure porteuse est constituée par un ensemble plan de quatre barres (12, 13, 14, 15) articulées entre elles deux à deux en parallélogramme déformable, deux premières barres (12, 13) comprenant une extrémité apte à être montée pivotante par rapport à une paroi avant (5) dudit logement autour d'un axe commun (16) sensiblement vertical apte à être lié à ladite paroi avant et deux secondes barres (14, 15) comprenant une extrémité libre reliée autour d'un axe commun (19) solidaire dudit cache.

2. Porte-vélo selon la revendication 1, **caractérisé en ce que** la position déployée correspond à la position extrême de déploiement maximal du parallélogramme déformable.

3. Porte-vélo selon la revendication 1 ou 2, **caractérisé en ce qu'**il comprend un mécanisme de verrouillage de la structure porteuse (10) dans sa position déployée.

4. Porte-vélo selon l'une quelconque des revendications précédentes, **caractérisé en ce que** ledit berceau de réception (21) comporte une bride de maintien (23) de la portion de cadre de vélo reçue dans ledit berceau de réception, ladite bride de maintien (23) étant apte à être placée dans un état ouvert permettant de ménager un passage radial de dépose de la portion de cadre de vélo dans le berceau de réception et dans un état fermé permettant d'obturer ledit passage et dans lequel ladite bride de maintien (23) est verrouillée sur ledit berceau de réception (21).

5. Porte-vélo selon la revendication 4, **caractérisé en ce que** ladite bride de maintien (23) est reliée au berceau de réception (21) par l'intermédiaire d'un verrou (24) apte à être actionné par la clé de contact (25) du véhicule.

6. Porte-vélo selon l'une quelconque des revendications précédentes, **caractérisé en ce que** ledit organe de support (20) comprend un mât-support (22) faisant saillie d'une des deux secondes barres (15) et à l'extrémité supérieure duquel est disposé le berceau de réception (21).

7. Porte-vélo selon la revendication 6, **caractérisé en ce que** ledit mât-support (22) est monté à coulissement vertical dans ladite une des secondes barres et à rotation par rapport à ladite une des secondes barres, des moyens d'indexation angulaire et de verrouillage étant prévus entre ledit mât-support et ladite une des secondes barres pour ne permettre le coulissement dudit mât-support que dans une position angulaire déterminée de celui-ci par rapport à ladite une des secondes barres et pour verrouiller ledit mât-support dans une position verticale déterminée.

8. Porte-vélo selon la revendication 7, **caractérisé en ce que** lesdits moyens d'indexation angulaire et de verrouillage comprennent une pluralité de pions (220) saillant transversalement dudit mât-support (22) et alignés à intervalles réguliers le long dudit mât-support, lesdits pions étant aptes à être insérés dans une rainure verticale correspondante d'un logement de réception (151) prévu dans ladite une des secondes barres, chaque pion étant apte à être clipsé dans ledit logement de réception par rotation dudit mât-support (22).

## Patentansprüche

1. Fahrradträger für ein Kraftfahrzeug, das eine Heckklappe aufweist, wobei der Fahrradträger eine Tragstruktur (10) beinhaltet, die dazu angepasst ist, zwischen mindestens zwei Positionen beweglich zu sein, nämlich einer zusammengelegten Position, in der sie dazu fähig ist, in einer zu diesem Zweck in der Heckklappe vorgesehenen Aufnahme (4) aufgenommen zu sein, und einer ausgezogenen Position, in der sie dazu fähig ist, sich in einer im Wesentlichen horizontalen Ebene von der Heckklappe zur Hinterseite des Fahrzeugs zu erstrecken, wobei die Tragstruktur über mindestens ein Stützorgan (20), das eine Halterung zum Empfangen (21) eines Abschnitts eines Fahrradrahmens beinhaltet, und eine Abdeckung (11), die dazu angepasst ist, die Aufnahme zu schließen und die Tragstruktur abzudecken, wenn sich diese in ihrer zusammengelegten Position befindet, verfügt, **dadurch gekennzeichnet, dass** die Tragstruktur aus einer ebenen Einheit aus vier Streben (12, 13, 14, 15) besteht, die als verformbares Parallelogramm jeweils paarweise gelenkig miteinander verbunden sind, wobei zwei erste Streben (12, 13) ein Ende beinhalten, das dazu fähig ist, mit Bezug auf eine vordere Wand (5) der Aufnahme um eine im Wesentlichen vertikale gemeinsame Achse (16), die dazu fähig ist, mit der vorderen Wand verbunden zu sein, schwenkbar angebracht zu sein, und zwei zweite Streben (14, 15) ein freies Ende beinhalten, das um eine gemeinsame Achse (19), die fest mit der Abdeckung verbunden ist, befestigt ist.

2. Fahrradträger nach Anspruch 1, **dadurch gekennzeichnet, dass** die ausgezogene Position der Endposition bei maximalem Ausziehen des verformbaren Parallelogramms entspricht.

3. Fahrradträger nach Anspruch 1 oder 2, **dadurch gekennzeichnet, dass** er einen Mechanismus zum Verriegeln der Tragstruktur (10) in ihrer ausgezogenen Position beinhaltet.

4. Fahrradträger nach einem beliebigen der vorhergehenden Ansprüche, **dadurch gekennzeichnet, dass** die Empfangshalterung (21) einen Bügel zum Halten (23) des in der Empfangshalterung empfangenen Abschnitts eines Fahrradrahmens umfasst, wobei der Haltebügel (23) dazu fähig ist, in einen offenen Zustand, der es gestattet, einen radialen Durchgang zum Absetzen des Abschnitts eines Fahrradrahmens in der Empfangshalterung zu schaffen, und in einen geschlossenen Zustand, der es gestattet, den Durchgang zu verschließen, und in dem der Haltebügel (23) an der Empfangshalterung (21) verriegelt ist, versetzt zu werden.

5. Fahrradträger nach Anspruch 4, **dadurch gekennzeichnet, dass** der Haltebügel (23) mittels eines Schlosses (24), das dazu fähig ist, durch den Zündschlüssel (25) des Fahrzeugs betätigt zu werden, an der Empfangshalterung (21) befestigt wird.

6. Fahrradträger nach einem beliebigen der vorhergehenden Ansprüche, **dadurch gekennzeichnet, dass** das Stützorgan (20) eine Stützstange (22) beinhaltet, die von einer der zwei zweiten Streben (15) vorsteht und an deren oberem Ende die Empfangshalterung (21) angeordnet ist.

7. Fahrradträger nach Anspruch 6, **dadurch gekennzeichnet, dass** die Stützstange (22) in der einen der zweiten Streben vertikal verschiebbar und mit Bezug auf die eine der zweiten Streben drehbar angebracht ist, wobei zwischen der Stützstange und der einen der zweiten Streben Mittel zur Winkelpositionierung und zur Verriegelung vorgesehen sind, um das Verschieben der Stützstange nur in eine bestimmte Winkelposition derselben mit Bezug auf die eine der zweiten Streben zu gestatten und um die Stützstange in einer bestimmten vertikalen Position zu verriegeln.

8. Fahrradträger nach Anspruch 7, **dadurch gekennzeichnet, dass** die Mittel zur Winkelpositionierung und zur Verriegelung eine Vielzahl von Vorsprüngen (220) beinhalten, die quer von der Stützstange (22) vorstehen und in regelmäßigen Abständen entlang der Stützstange angeordnet sind, wobei die Vorsprünge dazu fähig sind, in eine entsprechende vertikale Nut einer Empfangsaufnahme (151), die in der einen der zweiten Streben vorgesehen ist, eingeführt zu werden, wobei jeder Vorsprung dazu fähig ist, durch Drehen der Stützstange (22) in der Empfangsaufnahme einzurasten.

## Claims

1. Bicycle carrier for a motor vehicle having a tailgate, said bicycle carrier comprising a bearing structure (10) designed to be movable between at least two positions, respectively a folded position, in which it is able to be accommodated in a cutout (4) provided for this purpose in said tailgate, and a deployed position, in which it is able to extend from said tailgate, towards the rear of the vehicle, in a substantially horizontal plane, said bearing structure being provided with at least one support member (20) comprising a cradle (21) for receiving a bicycle frame portion, and with a cover (11) designed to close said cutout and conceal said bearing structure when it is in its folded position, **characterized in that** said bearing structure is made up of a planar assembly of four bars (12, 13, 14, 15) that are articulated to each other pairwise in the form of a deformable parallelogram, two first bars (12, 13) comprising an end that is able to be pivotably mounted with respect to a front wall (5) of said cutout around a substantially vertical common shaft (16) that is able to be connected to the front wall (5), and two second bars (14, 15) comprising a free end connected around a common shaft (19) secured to said cover.

2. Bicycle carrier according to Claim 1, **characterized in that** the deployed position corresponds to the extreme position of maximum deployment of the deformable parallelogram.

3. Bicycle carrier according to Claim 1 or 2, **characterized in that** it comprises a mechanism for locking the bearing structure (10) in its deployed position.

4. Bicycle carrier according to any one of the preceding claims, **characterized in that** said receiving cradle (21) has a flange (23) for holding the bicycle frame portion received in said receiving cradle, said holding flange (23) being able to be placed in an open state, which makes it possible to create a radial passage for putting the bicycle frame portion in the receiving cradle, and in a closed state, which makes it possible to block said passage and in which said holding flange (23) is locked to said receiving cradle (21).

5. Bicycle carrier according to Claim 4, **characterized in that** said holding flange (23) is connected to the receiving cradle (21) by way of a lock (24) that is able to be actuated by the ignition key (25) of the vehicle.

6. Bicycle carrier according to any one of the preceding claims, **characterized in that** said support member (20) comprises a support post (22) which protrudes from one of the two second bars (15) and at the upper end of which the receiving cradle (21) is disposed.

7. Bicycle carrier according to Claim 6, **characterized in that** said support post (22) is mounted with the ability to slide vertically in said one of the second bars and with the ability to rotate with respect to said one of the second bars, angular indexing and locking means being provided between said support post and said one of the second bars so as to allow said support post to slide only in a determined angular position thereof with respect to said one of the second bars and so as to lock said support post in a determined vertical position.

8. Bicycle carrier according to Claim 7, **characterized in that** said angular indexing and locking means comprise a plurality of pins (220) that protrude transversely from said support post (22) and that are aligned at regular intervals along said support post, said pins being able to be inserted in a corresponding vertical slot of a receiving cutout (151) provided in said one of the second bars, each pin being able to be clipped in said receiving cutout by rotation of said support post (22).
